# EUROPÄISCHE PATENTSCHRIFT

(11) **EP 2 070 717 B1**
(45) Veröffentlichungstag und Bekanntmachung des Hinweises auf die Patenterteilung: **15.05.2013**
(21) Anmeldenummer: 07122757.3
(22) Anmeldetag: 10.12.2007
(51) Int. Cl.: B41N 6/00, B41N 10/02, B41N 10/04

(54) **Verfahren zur Montage eines Gummituchs im Offset-Druck**
Method for mounting a rubber blanket in offset printing
Procédé de montage d'un blanchet de caoutchouc en impression offset

(43) Veröffentlichungstag der Anmeldung: 17.06.2009
(73) Patentinhaber: Folex Coating GmbH, 50757 Köln (DE)
(72) Erfinder: Dietrich, Thomas, Dr., 50859 Köln (DE); Jotzo, Michael, 40227 Düsseldorf (DE); Weber, Arne, 52064 Aachen (DE)
(74) Vertreter: von Kreisler Selting Werner

(56) Entgegenhaltungen:
- EP-A- 1 561 598
- EP-A1- 0 491 253
- EP-A2- 0 206 760
- EP-A2- 0 320 676
- EP-A2- 1 800 864
- WO-A1-2006/050863
- DE-A1- 10 347 024
- GB-A- 2 258 870
- US-A- 3 983 287
- US-A- 4 574 697
- US-A- 5 431 989
- US-A- 5 476 712
- US-A- 5 478 637
- US-A1- 2005 276 969

## Beschreibung

Die vorliegende Erfindung betrifft ein Verfahren zur Montage einer Unterlage im Offset-Druck. Im Offset-Druck (Bogenoffset und Rollenoffset) wird eine Druckplatte aus Metall oder Kunststoff eingefärbt. Diese Druckplatte übergibt das Druckbild an ein Gummituch. Das Druckbild wird dann vom Gummituch auf den Bedruckstoff übergeben.

Das Gummituch im Druckwerk einer Offset-Druckmaschine, die Druckplatte und auch der Bedruckstoff sind so auf Zylindern aufgespannt, dass sie aufeinander abrollen.

Gummitücher mit maßstabilen Gewebeschichten, kompressiblen Schichten oder auch Metallträgern gibt es von sehr vielen Herstellern in den unterschiedlichsten Aufbauten.

US 5,478,637 beschreibt ein Gummituch umfassend eine kompressible Schicht, eine Stützschicht sowie die farbübertragende Polymerschicht.

US 3,983,287 offenbart ein Gummituch umfassend eine farbübertragende Schicht, eine kompressible Schicht sowie eine Stützschicht, wobei die einzelnen Schichten jeweils mit einer separaten adhäsiven Schicht miteinander verbunden sind.

EP 1 561 598 A1 offenbart ein Drucktuch umfassend eine formstabile Schicht, mehrere kompressible Schichten und eine farbübertragende Gummischicht und einer zwischen der Gummischicht und der kompressiblen Schicht angeordneten Stützschicht.

US 5,431,989 beschreibt ein elastisches und kompressibles Drucktuch umfassend eine Farbübertragungsschicht, eine harte Elastomerschicht, sowie zwei Gummischichten, welche durch eine Faserschicht voneinander getrennt sind.

US 2005/0276969 A1 offenbart ein Dämpfungsmaterial umfassend eine Schaumstoffschicht und mindestens eine adhäsive Schicht.

Alle diese Gummitücher reagieren mehr oder weniger empfindlich auf mechanische Überbelastung. Diese mechanische Überbelastung tritt auf, wenn unbeabsichtigt der Bedruckstoff gefaltet wird (Knautscher) oder wenn mehrere Bögen Bedruckstoff gleichzeitig, über einander liegend durch die Druckmaschine gezogen und bedruckt werden (Doppler). Auch sind im täglichen Druckprozess kleine Reststücke an Bedruckstoff (z.B. Papierschnipsel) oder Holzspäne von Paletten und Verpackungsmaterial der Bedruckstoffe ein Problem.

Die mechanische Überbeanspruchung deformiert dabei das Gummituch. Solche Gummitücher sind dann irreversibel geschädigt und müssen ausgetauscht werden.

Heutige Druckmaschinen im Bogenoffset können 12 Druckwerke aufweisen. Bei einem Knautscher oder Doppler, oder anderen Ereignissen, die das Gummituch mechanisch verändern, müssen oft alle Gummitücher gewechselt werden. Dadurch werden lange und sehr kostspielige Maschinenstillstände verursacht und die geschädigten Verbrauchsmaterialien müssen kostspielig ersetzt werden.

Aufgabe der vorliegenden Erfindung war es, die genannten Nachteile zu überwinden, insbesondere den Offset-Druck zu verbessern.

Überraschenderweise kann die Aufgabe gelöst werden durch ein Verfahren mit den Merkmalen des Anspruchs 1.

Die erfindungsgemäß eingesetzte, mindestens eine geschäumte Schicht hat bevorzugt ein Raumgewicht im Bereich von 80 Kg/m³ bis 1.200 kg/m³, bevorzugt 100 bis 600 Kg/m³ oder 250 bis 1000 Kg/m³. Es kann zusätzlich mindestens eine Adhäsivklebstoffschicht vorhanden sein. Es kann auch eine formstabile Schicht oder mindestens eine weitere flexible Schicht vorhanden sind.

Eine flexible Schicht ist eine Schicht, die ein Elastizitätsmodul im Bereich von 1 MPa bis 1.000 MPa aufweist.

Eine typische Gesamtdicke für den Aufbau des Unterlagentuchs liegt im Bereich von 0,2 bis 4,5 mm, mehr bevorzugt 0,2 bis 3,4mm.

Zwischen den dargestellten, geschäumten, flexiblen und formstabilen Schichten können jeweils Klebstoffschichten zum Verbinden der Schichten vorhanden sein, die in den Figuren nicht dargestellt sind.

Als Materialien für die geschäumten Schichten eignen sich insbesondere Polyurethane, vernetzte Polyethylene, Polypropylene, Nitril-Butyl-Gummi, Neoprene, Ethylen-Propylen-Kautschuk.

GB 2 258 870 A beschreibt einen Polyurethanschaum mit einer Dichte von 208 bis 480 kg/m³, welches eines reduzierte Entflammbarkeit und Rauchentwicklung aufweist.

Bei Einsatz von Ethylen-Prophylen-Kautschuken liegen geeignete Normgewichte zwischen 110 und 400 Kg/m³ und für Polypropylene bei 80 bis 340 Kg/m³.

Als formstabile Schicht eignen sich beispielweise Polyester, Aluminium, Edelstahl, Messing oder Gewebe.

Als flexible Schicht eignen sich insbesondere Polyurethane, Polyvinylchloride, Silikone, Silikongele, Nitril-Butyl-Gummi oder Mischungen davon.

D ie Unterlage kann mit Hilfe eines Adhäsivklebstoffs am Gummituchzylinder befestigt werden.

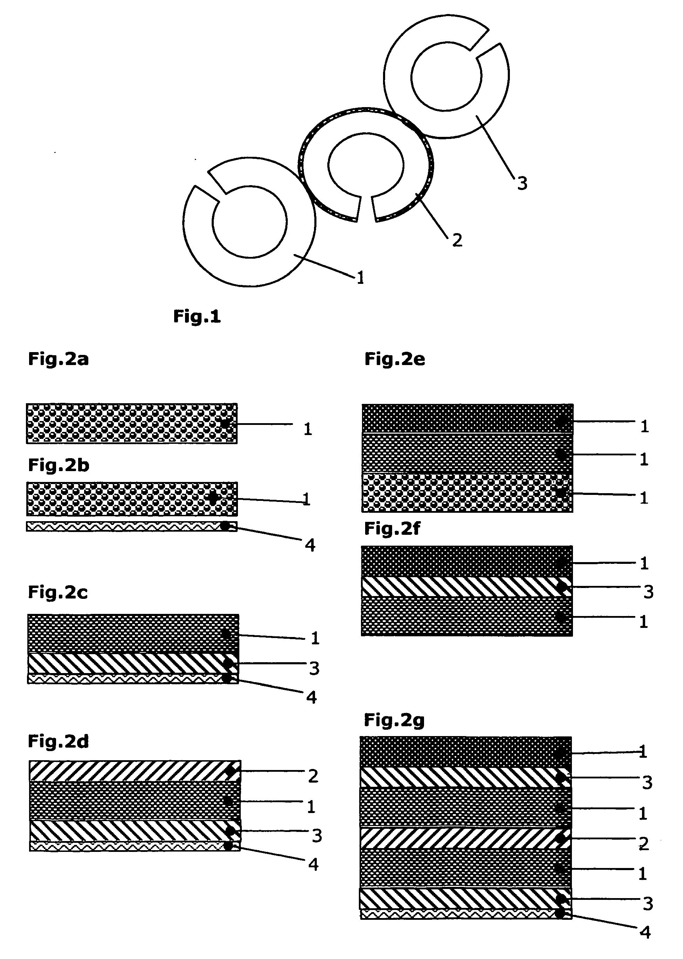

Figur 1 zeigt einen typischen Aufbau eines Druckwerks mit einem Gegendruckzylinder 1, einem Gummituchzylinder mit Gummituch 2 und einem Druckplattenzylinder mit Druckplatte 3.
Figur 2a zeigt einen einschichtigen Aufbau einer geschäumten Schicht 1.
Figur 2b zeigt eine geschäumte Schicht 1 in Kombination mit einer Klebstoffschicht 4.
Figur 2c zeigt eine geschäumte Schicht 1 zusammen mit einer formstabilen Schicht 3 und einer drucksensitiven Klebstoffschicht 4.
Figur 2d zeigt eine flexible Schicht 2 gefolgt von einer formstabilen Schicht 3 und einer Klebstoffschicht 4.
Figur 2e zeigt einen Aufbau mit mehreren geschäumten Schichten (1,1,1) mit unterschiedlichen Raumgewichten.
Figur 2f zeigt einen Aufbau mit einer geschäumten Schicht 1, einer formstabilen Schicht 3 und einer geschäumten Schicht 1.
Figur 2g zeigt eine geschäumte Schicht 1 gefolgt von einer formstabilen Schicht 3, einer weiteren geschäumten Schicht 1, einer flexiblen Schicht 2, einer geschäumten Schicht 1, einer stabilen Schicht 3 und einer Klebstoffschicht 4.

Die Erfindung wird durch das nachfolgende Beispiele näher erläutert.

### Beispiel 1:

Eine Mayser^{®} Inducon S 400 Schicht, mit einer Dicke von 400 µm wurde mit einer formstabilen Schicht DuPont Mylar^{®} A 225, mit einer Dicke von 225 µm, und einer Klebstoffschicht ATP S-4708 EA P080 1635, mit einer Dicke von 80 µm verbunden. Dabei erfolgte die Verklebung zwischen der ersten und der zweiten Schicht über NC 120ASL/NC111B durch gleichflächigen Auftrag mittels eines Rakels. Die Gesamtdicke betrug etwa 700 µm.

## Patentansprüche

1. Verfahren zur Montage eines Gummituchs im Offsetdruck umfassend die Schritte:
- Montage einer Unterlage, umfassend mindestens eine geschäumte Schicht auf einen Gummituchzylinder,
- Montage eines Gummituchs auf der Unterlage.

2. Verfahren nach Anspruch 1, **dadurch gekennzeichnet, dass** die Unterlage mit Hilfe eines Adhäsivklebstoffes am Gummituchzylinder befestigt wird.

3. Verfahren nach einem der Ansprüche 1 oder 2, **dadurch gekennzeichnet, dass** die geschäumte Schicht geschlossenzellig oder offenzellig ist.

4. Verfahren nach einem der Ansprüche 1 bis 3, wobei die mindestens eine geschäumte Schicht ein Raumgewicht im Bereich von 80 Kg/m³ bis 1.200 kg/m³ aufweist.

5. Verfahren nach einem der Ansprüche 1 bis 4, **dadurch gekennzeichnet, dass** zusätzlich mindestens eine formstabile Schicht vorhanden ist, wobei bevorzugt die mindestens eine formstabile Schicht aus Polyester, Aluminium, Edelstahl, Messing oder einem Gewebe besteht.

6. Verfahren nach einem der Ansprüche 1 bis 5, **dadurch gekennzeichnet, dass** zusätzlich mindestens eine flexible Schicht vorhanden ist, die ein Elastizitätsmodul von 1 bis 1000 MPa aufweist, wobei bevorzugt die mindestens eine flexible Schicht aus Polyurethan, Polyvinylchlorid, Silikon, Silikongelen, Nitril-Butyl-Gummi oder Mischungen davon besteht.

7. Verfahren nach mindestens einem der Ansprüche 1 bis 6, **dadurch gekennzeichnet, dass** die mindestens eine geschäumte Schicht aus Polyurethan, vernetztem Polyethylen, Nitril-Butyl-Gummi, Neopren oder Mischungen davon besteht.

8. Verfahren nach einem der Ansprüche 1 bis 7, **dadurch gekennzeichnet, dass** die Unterlage mehrere geschäumte Schichten aufweist, wobei vorzugsweise die mehreren geschäumten Schichten aus unterschiedlichen Polymeren bestehen.

## Claims

1. Process for mounting a rubber blanket in offset printing, comprising the steps of:
- mounting a substrate comprising at least one foamed layer onto a blanket cylinder;
- mounting a rubber blanket on said substrate.

2. The process according to claim 1, **characterized in that** said substrate is attached to said blanket cylinder by means of an adhesive glue.

3. The process according to either of claims 1 or 2, **characterized in that** said foamed layer is closed-cell or open-cell.

4. The process according to any of claims 1 to 3, wherein said at least one foamed layer has a density within a range of from 80 kg/m³ to 1200 kg/m³.

5. The process according to any of claims 1 to 4, **characterized in that** additionally at least one dimensionally stable layer is present, wherein preferably said at least one dimensionally stable layer is made of polyester, aluminum, stainless steel, brass or a fabric.

6. The process according to any of claims 1 to 5, **characterized in that** additionally at least one flexible layer having a modulus of elasticity of from 1 to 1000 MPa is present, wherein preferably said at least one flexible layer is made of polyurethane, polyvinyl chloride, silicone, silicone gels, nitrile-butyl rubber, or mixtures thereof.

7. The process according to at least one of claims 1 to 6, **characterized in that** said at least one foamed layer is made of polyurethane, cross-linked polyethylene, nitrile-butyl rubber, neoprene, or mixtures thereof.

8. The process according to any of claims 1 to 7, **characterized in that** said substrate includes several foamed layers, wherein preferably said several foamed layers are made of different polymers.

## Revendications

1. Procédé de montage d'un blanchet de caoutchouc en impression offset, ledit procédé comportant les étapes de :
- montage d'un support, comportant au moins une couche alvéolaire sur un cylindre de blanchet de caoutchouc,
- montage d'un blanchet de caoutchouc sur le support.

2. Procédé selon la revendication 1, **caractérisé en ce que** le support est fixé au cylindre de blanchet de caoutchouc à l'aide d'une matière adhésive.

3. Procédé selon l'une des revendications 1 ou 2, **caractérisé en ce que** la couche alvéolaire est à alvéoles fermées ou alvéoles ouvertes.

4. Procédé selon l'une des revendications 1 à 3, dans lequel l'au moins une couche alvéolaire a un poids spécifique de l'ordre de 80 kg/m³ à 1200 kg/m³.

5. Procédé selon l'une des revendications 1 à 4, **caractérisé en ce que** en plus au moins une couche de forme stable est présente, de préférence l'au moins une couche de forme stable est en polyester, aluminium, acier fin, laiton ou tissu.

6. Procédé selon l'une des revendications 1 à 5, **caractérisé en ce que** en plus au moins une couche flexible est présente qui a un module d'élasticité de 1 à 1000 MPa, de préférence l'au moins une couche flexible est en polyuréthane, silicone, gels de silicone, caoutchouc nitrile-butyle ou des mélanges de ceux-ci.

7. Procédé selon au moins une des revendications 1 à 6, **caractérisé en ce que** l'au moins une couche alvéolaire est en polyuréthane, polyéthylènes réticulés, caoutchouc nitrile-butyle, néoprène ou des mélanges de ceux-ci.

8. Procédé selon l'une des revendications 1 à 7, **caractérisé en ce que** le support possèdent plusieurs couches alvéolaires, de préférence les plusieurs couches alvéolaires étant en différents polymères.
